# EUROPEAN PATENT SPECIFICATION

(11) **EP 2 831 014 B1**
(45) Date of publication and mention of the grant of the patent: **21.07.2021**
(21) Application number: 13716856.3
(22) Date of filing: 29.03.2013
(51) Int. Cl.: C04B 28/02

(54) **METHOD FOR MANUFACTURING CONCRETE, MORTAR OR GROUT USING LIGNITE FLY ASH AND CONCRETE, MORTAR OR GROUT OBTAINABLE BY SAID METHOD**
VERFAHREN ZUR HERSTELLUNG VON BETON, MÖRTEL ODER VERGUSSMÖRTEL AUS BRAUNKOHLEFLUGASCHE SOWIE IN DIESEM VERFAHREN HERGESTELLTER BETON, MÖRTEL ODER VERGUSSMÖRTEL
PROCÉDÉ POUR LA FABRICATION DE BÉTON, DE MORTIER OU DE COULIS DE CIMENT UTILISANT DE LA CENDRE VOLANTE DE LIGNITE ET BÉTON, MORTIER OU COULIS DE CIMENT POUVANT ÊTRE OBTENU PAR LEDIT PROCÉDÉ

(30) Priority: 30.03.2012 NL 2008574
(43) Date of publication of application: 04.02.2015
(73) Proprietor: Van Nieuwpoort Beheer B.V., 2800 AC Gouda (NL)
(72) Inventor: VAN MECHELEN, Dirk Maria Alfons Jules, B-2830 Tisselt (BE); VERMEULEN, Edwin Menno Michaël, NL-2408 HL Alphen Aan De Rijn (NL)
(74) Representative: EP&C
(86) International application number: PCT/NL2013/050236
(87) International publication number: WO 2013/147607

(56) References cited:
- DE-A1- 4 039 014
- DE-A1- 19 503 142
- FR-A1- 2 543 942
- US-A- 4 715 896
- None

## Description

### Technical Field

The present invention relates to a method for preparing concrete, mortar or grout using lignite fly ash. The invention further relates to the a concrete, mortar or grout obtainable by said method.

### Background Art

The most commonly used type of cement is portland cement, which is typically prepared by calcining limestone, i.e. calcium carbonate, in the presence of small quantities of other materials.

Although concrete made with portland cement is renowned for its advantageous properties such as fast hardening and high ultimate compressive strength, there is a growing concern on the environmental aspects of manufacturing large amounts of portland cement. In addition, efforts have been made to replace portland cement with cheaper alternatives.

It is known to replace part of the portland cement present in a binder composition with fly ash. Fly ashes can be divided into anthracite, bituminous, subbituminous and lignite fly ash, the names referring to the type of coal they originate from. Although the chemical composition of the different types of fly ash varies considerably, all fly ashes have in common that they comprise certain amounts of silicon dioxide, aluminum oxide, iron oxide and calcium oxide. Generally, a lignite fly ash has the highest calcium oxide content and the lowest combined amount of silicon, iron and aluminum oxides. Fly ashes can also be classified as class F fly ash or class C fly ash, the compositional differences between both residing in the calcium oxide content, the sulphate content and the combined amounts of silicon, iron and aluminum oxide. According to ASTM C618, a fly ash is considered a class F fly ash when the sum of silicon, iron and aluminum oxides is 70 wt.% or higher and the sulphate content does not exceed 5 wt.%. In a class C fly ash the sum of silicon, iron and aluminum oxides is 50 wt.% or higher and the sulphate content does not exceed 5 wt.%. Although not a requirement under ASTM C618, class F fly ashes typically have a calcium oxide content lower than 20 wt.%, whereas the calcium oxide content of a class C fly ash typically exceeds 20 wt.%.

US4715896 is related to a binder composition for consolidated fills that are well-adapted for use in non-structural applications such as back fills in mine excavations and sludge stabilization. The binder composition comprises about 55 to 97 wt.% of finely divided water-hardenable vitrified cementitious iron blast furnace slag; about 3 to 45 wt.% of class C fly ash; and about 2 to 15 wt.% of calcium hydroxide. In this document, a distinction is made between class C and class F fly ash. The class C fly ash originates from the Rocky Mountains regions of North America, whereas the class F fly ash originates from the Appalachian regions. Table 2, comparative example 4, shows the compressive strength after 7, 14 and 28 days of a mixture of class C fly ash and water, without aggregate material. It turns out to be essential that a class C fly ash is used, since a class F fly ash exhibits no significant strength after 28 days, not even when used in combination with calcium hydroxide. This leads the skilled person to the conclusion that, according to US4715896, no fly ashes other than class C fly ash are suitable fur use in cement setting reactions.

FR2543942 describes a binder material that comprises lignite fly ash and ground gypsum for the preparation of concrete. It was found that lignite fly ash as sole binder material resulted in inferior mechanical resistance. It was further observed that lignite fly ash might have a sulphate content in the range of 5 to 9%wt. In an example two binder compositions comprising lignite fly ash and gypsum in a 30/70, and 50/50 ratio, respectively, were tested in a concrete composition comprising 53% fine sand, 35 % limestone and 12% granulated blast furnace slag.

It has now surprisingly been found that excellent mechanical properties are obtainable when a binding agent is used that consists essentially of lignite fly ash if the lignite fly ash has a sulphate content of at least 6%wt.

### Description of the Invention

Accordingly, the present invention provides a method for manufacturing concrete, mortar or grout, comprising the step of allowing a mixture of a suitable aggregate material, a binding agent and water to set, wherein the binding agent consists essentially of lignite fly ash having a sulphate content of 6 wt.% or higher, based on the weight of the lignite fly ash. This lignite fly ash is neither a class C fly ash, nor a class F fly ash.

Surprisingly, the inventors found that when a concrete, mortar or grout is made, it is sufficient to employ the lignite fly ash according to invention as the sole binding agent. In other words, a significant build-up of compressive strength is observed when employing the lignite fly ash according to the invention, without the need of employing any other binding agents such as portland cement or ggbs. It is believed that the increased amount of sulphate in the present lignite fly ash causes a setting concrete, mortar or grout mixture to acquire significant compressive strength.

Advantageously, the lignite fly ash is slaked before addition to the binder composition. Slaking is the process of treating the fly ash with water in order to convert the calcium or magnesium oxides present in the lignite fly ash to their corresponding hydroxides.

The lignite fly ash according to the invention can be incorporated in the binder composition as such, or it can be milled or ground before addition. Milling or grinding has the advantage of increasing the specific surface or Blaine of the fly ash and hence enhancing the cementitious reactions, leading to a higher compressive strength. Preferably, the lignite fly has a Blaine of 400 m²/kg or more. The specific surface or Blaine can be determined using any suitable technique known in the art, e.g. air permeability tests using a Blaine permeameter.

As stated above, all fly ashes, including the lignite fly ash according to the invention, have in common that they comprise certain amounts of silicon dioxide, aluminum oxide, iron oxide and calcium oxide. To determine the chemical composition of the lignite fly ash and the second ingredients any technique commonly used in the art may be employed. Suitable examples of such techniques include x-ray fluorescence (XRF) and x-ray diffraction (XRD).

Preferably, the silicon dioxide content of the lignite fly ash according to the invention does not exceed 35 wt.%. Further, the combined amount of the oxides of silicon, aluminum and iron preferably does not exceed 50 wt.%. The calcium oxide content of the lignite fly ash is preferably 20 wt.% or higher, more preferably of from 30 to 50 wt.%.

As to the sulphate content of the lignite fly ash, although a sulphate content of 6 wt.% or higher leads to good results, even better results are obtained when the sulphate content lies between 7.5 and 15 wt.%, based on the weight of the lignite fly ash. The sulphate content of lignite fly ash can be measured using any analytical technique or method commonly used in the art, e.g. XRF. It is reported as the sulphur trioxide (SO₃) content, in percentage by weight, based on the total weight of the lignite fly ash composition.

Advantageously, the lignite fly ash comprises a certain amount of free lime, in this context also known as free calcium oxide. In the present context, the expression "free lime" denotes the amount of calcium oxide present in the unslaked lignite fly ash that is available for hydration upon being contacted with water. In this respect it is noted that the remaining fraction of calcium oxide that is not considered "free" is present in the lignite fly ash in the form of calcium aluminates, silicates and aluminosilicates, or it is part of a glassy, amorphous phase, or both. Free lime increases the ultimate compressive strength and boosts the initial setting speed of a setting concrete, mortar or grout mixture. Preferably, the lignite fly ash has a free lime content of at least 2.5 wt.%. More preferably, the free lime content lies between 4 and 10 wt.%.

In the method according to the invention, the lignite fly ash can be combined with one or more additives selected from the group consisting of dyes, plasticizers, stabilizers, waterproofing agents, frost proofing agents, dust proofing agents, air entrainment agents, set accelerating agents and preservatives.

Advantageously, the method according to the invention comprises the steps of:
(a) bringing together, e.g. in a cement mixer, an aggregate material, a lignite fly ash according to the invention and water, thereby forming a wet concrete, mortar or grout mixture;
(b) applying said mixture to a substrate; and
(c) allowing said mixture to cure.

More specifically, said method comprises the steps of:
(a) bringing together, e.g. in a cement mixer, an aggregate material, a lignite fly ash according to the invention and water, thereby forming a wet concrete, mortar or grout mixture;
(b1) pouring said mixture in the case of concrete or grout; or
(b2) applying said mixture on a block or brick in the case of mortar; and
(c) allowing said mixture to cure.

The nature of the aggregate material used in the above method is not particularly limited. In fact, every aggregate material commonly used in the art is suitable. Examples of suitable aggregate materials include sand, natural gravel, shingle, grit and crushed rock. Also recycled materials (derived from construction, demolition and excavation waste) can be used as an at least partial replacement for conventional aggregate materials. It is noted that in the present context the term "aggregate material" also includes mixtures of aggregate materials, such as a combination of sand and gravel.

The weight proportions of aggregate material, lignite fly ash and water are application and location dependent. The person skilled in the art, however, is capable of determining which amounts of said aggregate material, lignite fly ash and water should be combined in order to obtain a suitable concrete, mortar or grout.

Yet another aspect of the invention is related to a concrete-aggregate composition comprising a suitable aggregate material and lignite fly ash, both as specified above. This composition is suitably mixed with water to form a concrete, mortar or grout. According to the present invention, the aggregate material and lignite fly ash are present in the concrete-aggregate composition in a weight ratio of between 2:1 and 10:1. Advantageously, the concrete-aggregate composition is used to in the manufacture of a concrete floor.

Still another aspect of the invention is related to concrete, mortar or grout obtainable by the above specified method or by allowing a mixture of the above concrete-aggregate composition and water to set.

In a preferred embodiment, a concrete floor or a road base comprising one or more concrete layers obtainable by the method of the present invention is provided. Alternatively, such a concrete floor or road base is provided by allowing a mixture of the above concrete-aggregate composition and water to set. In this context, a road base is a concrete layer that is used as a structural base of a road. To manufacture a concrete floor or a road base a suitable aggregate material, lignite fly ash according to the invention and water are preferably mixed in a weight ratio of from about 4:2:1 to 15:5:1 so as to obtain a wet concrete mixture or slurry. Alternatively, a concrete-aggregate composition according to the invention and water are mixed in a weight ratio of 6:1 to 20:1. The thus formed wet mixture is then poured over the floor or road surface and allowed to set. When used as a floor, the concrete layer can be the surface layer or it can be covered with one or more top layers comprising e.g. a wear resistant resin. When used as a road base, the concrete layer may be covered with one or more asphalt concrete layers.

The invention is now illustrated by means of the following examples.

### Examples

A lignite fly ash A according to the invention was used as a binding agent in the preparation of concrete. The chemical composition of fly ash A is listed in table 1. The chemical composition was determined using XRF. In addition, the free lime content was determined using XRD.

| **Table 1** | |
|---|---|
| ingredients (wt.%) | lignite fly ash A |
| SiO₂ | 24 |
| Fe₂O₃ | 10 |
| CaO¹ | 41 |
| MgO | 4 |
| Al₂O₃ | 11 |
| SiO₂+ Fe₂O₃ + Al₂O₃ | 45 |
| Na₂O | 0 |
| K₂O | 0 |
| SO₃ | 10 |
| | |
| Free lime¹ | 8 |
| | |
| ¹The CaO content includes the free lime content | |

### Example 1

In correspondence with NEN standard EN 197-1, 1350 grams of sand (grain size up to 4 mm), 450 grams of a binder composition comprising lignite fly ash A and 225 grams of water were mixed in a 40x40x160 mm mould and allowed to set. After 6 days the sample was released from the mould and wrapped in foil. The lignite fly ash was not ground or slaked prior to addition to the binder composition. In table 2 the compressive strength after 56 days is listed.

### Example 2

The procedure set out in example 1 was repeated with the difference that lignite fly ash A was slaked prior to its addition to the binder composition. In table 2 the compressive strength after 28 and 56 days is listed.

### Example 3

In correspondence with NEN standard EN 197-1, 1350 grams of sand (grain size up to 4 mm), 500 grams of a binder composition comprising lignite fly ash A and 205 grams of water were mixed in a 40x40x160 mm mould and allowed to set. After 7 days the sample was released from the mould and placed underwater. The lignite fly ash A was ground to a Blaine of 550 m²/kg and slaked prior to addition to the binder composition. In addition 1.6 wt.%, based on the weight of the lignite fly ash, of a modified polycarboxylate plasticizer (Chrysofluid® Optima 200) was added to the mixture. In table 2 the compressive strength after 28 and 91 days is listed.

| **table 2** | | | |
|---|---|---|---|
| example | 1 | 2 | 3 |
| | | | |
| lignite fly ash | A | A | A |
| slaked | no | yes | yes |
| ground | no | no | yes |
| Blaine (m²/kg) | | | 550 |

| compressive strength (MPa); after: | | | |
|---|---|---|---|
| 28 days | - | 6.0 | 22.1 |
| 56 days | 13.9 | 12.5 | - |
| 91 days | - | - | 33.2 |

The results in table 2 show that the use of lignite fly ash A as a binding agent leads to a concrete mortar or grout having a significant compressive strength. Particularly good results are obtained when the lignite fly ash is ground and slaked before use.

## Claims

1. Method for manufacturing concrete, mortar or grout, comprising the step of allowing a mixture of an aggregate material suitable for the manufacturing of concrete, mortar or grout, a binding agent and water to set, wherein the binding agent consists essentially of lignite fly ash having a sulphate content of 6 weight percent (wt.%) or higher, based on the weight of the lignite fly ash, and wherein the aggregate material and the lignite fly ash are present in the mixture in a weight ratio of between 2:1 and 10:1.

2. Method according to claim 1, wherein the lignite fly ash is slaked prior to its addition to the mixture.

3. Method according to claim 1 or 2, wherein the lignite fly ash is ground prior to its addition to the mixture.

4. Method according to claim 3, wherein the lignite fly ash has a Blaine of 400 m²/kg or more.

5. Method according to one of the preceding claims, wherein the lignite fly ash has a sulphate content of from 7.5 to 15 wt.%, based on the weight of the lignite fly ash.

6. Method according to one of the preceding claims, wherein the lignite fly ash comprises silicon oxides in an amount of at most 35 wt.%, based on the weight of the lignite fly ash.

7. Method according to one of the preceding claims, wherein the combined amount of the oxides of silicon, aluminum and iron present in the lignite fly ash does not exceed 50 wt.%, based on the weight of the lignite fly ash.

8. Method according to one of the preceding claims, wherein the lignite fly ash comprises calcium oxide in an amount of at least 20 wt.%, preferably 30 to 50 wt.%, based on the weight of the lignite fly ash.

9. Method according to one of the preceding claims, wherein the lignite fly ash comprises free lime, preferably in an amount of at least 2.5 wt.%, more preferably 4 to 10 wt.%, based on the weight of the lignite fly ash.

10. Method according to one of the preceding claims, wherein one or more additives selected from the group consisting of dyes, plasticizers, stabilizers, waterproofing agents, frost proofing agents, dust proofing agents, air entrainment agents, set accelerating agents and preservatives are added to the mixture.

11. Concrete, mortar or grout or concrete floor obtainable by the method of one of the preceding claims 1 to 10 or by allowing a mixture of a concrete-aggregate composition comprising an aggregate material and a binding agent which consists essentially of lignite fly ash having a sulphate content of 6 wt.% or higher, based on the weight of the lignite fly ash and water to set, wherein the aggregate material and the lignite fly ash are present in the mixture in a weight ratio of between 2:1 and 10:1.

12. Use of lignite fly ash having a sulphate content of 6 wt.% or higher, based on the weight of the lignite fly ash, as the sole binding agent of aggregate material in the manufacturing of concrete, mortar or grout, wherein the aggregate material and the lignite fly ash are present in the mixture in a weight ratio of between 2:1 and 10:1.

## Patentansprüche

1. Verfahren zur Herstellung von Beton, Mörtel oder Vergussmörtel, umfassend den Schritt des Erlaubens, dass ein Gemisch aus einem zur Herstellung von Beton, Mörtel oder Vergussmörtel geeigneten Aggregatmaterial, einem Bindemittel und Wasser fest wird, wobei das Bindemittel im Wesentlichen aus Braunkohlenflugasche besteht, die einen Sulfatgehalt von 6 Gewichtsprozent (Gew.-%) oder mehr basierend auf dem Gewicht der Braunkohlenflugasche aufweist, und wobei das Aggregatmaterial und die Braunkohlenflugasche in dem Gemisch in einem Gewichtsverhältnis von zwischen 2:1 und 10:1 vorhanden sind.

2. Verfahren nach Anspruch 1, wobei die Braunkohlenflugasche vor deren Beigabe zu dem Gemisch gelöscht wird.

3. Verfahren nach Anspruch 1 oder 2, wobei die Braunkohlenasche vor deren Beigabe zu dem Gemisch gemahlen wird.

4. Verfahren nach Anspruch 3, wobei die Braunkohlenflugasche einen Blaine-Wert von 400 m²/kg oder mehr aufweist.

5. Verfahren nach einem der vorstehenden Ansprüche, wobei die Braunkohlenflugasche einen Sulfatgehalt von 7,5 bis 15 Gew.-% basierend auf dem Gewicht der Braunkohlenflugasche aufweist.

6. Verfahren nach einem der vorstehenden Ansprüche, wobei die Braunkohlenflugasche Siliciumoxide in einer Menge von höchstens 35 Gew.-% basierend auf dem Gewicht der Braunkohlenflugasche umfasst.

7. Verfahren nach einem der vorstehenden Ansprüche, wobei die kombinierte Menge der Oxide von Silicium, Aluminium und Eisen, die in der Braunkohlenflugasche vorhanden sind, 50 Gew.-% basierend auf dem Gewicht der Braunkohlenflugasche nicht übersteigt.

8. Verfahren nach einem der vorstehenden Ansprüche, wobei die Braunkohlenflugasche Kalziumoxid in einer Menge von mindestens 20 Gew.-%, vorzugsweise 30 bis 50 Gew.-% basierend auf der Braunkohlenflugasche umfasst.

9. Verfahren nach einem der vorstehenden Ansprüche, wobei die Braunkohlenflugasche Freikalk, vorzugsweise in einer Menge von mindestens 2,5 Gew.-%, bevorzugter 4 bis 10 Gew.-% basierend auf dem Gewicht der Braunkohlenflugasche umfasst.

10. Verfahren nach einem der vorstehenden Ansprüche, wobei ein oder mehrere Additive, ausgewählt aus der Gruppe bestehend aus Farbstoffen, Weichmachern, Stabilisatoren, Abdichtstoffen, Frostschutzmitteln, Staubschutzmitteln, Luftporengehaltsstoffen, Aushärtbeschleunigern und Konservierungsmitteln zum Gemisch beigegeben werden.

11. Beton, Mörtel oder Vergussmörtel oder Betonboden, die durch das Verfahren nach einem der vorstehenden Ansprüche 1 bis 10 oder durch Erlauben erhältlich sind, dass ein Gemisch einer Beton-Aggregatzusammensetzung, die ein Aggregatmaterial und ein Bindemittel, das im Wesentlichen aus Braunkohlenflugasche besteht und einen Sulfatgehalt von 6 Gew.-% oder mehr basierend auf dem Gewicht der Braunkohlenflugasche aufweist, und Wasser umfasst, fest wird, wobei das Aggregatmaterial und die Braunkohlenflugasche in einem Gewichtsverhältnis von zwischen 2:1 und 10:1 in dem Gemisch vorhanden sind.

12. Verwendung von Braunkohlenflugasche, die einen Sulfatgehalt von 6 Gew.-% oder mehr basierend auf dem Gewicht der Braunkohlenflugasche aufweist, als alleiniges Bindemittel eines Aggregatmaterials bei der Herstellung von Beton, Mörtel oder Vergussmörtel, wobei das Aggregatmaterial und die Braunkohlenflugasche in einem Gewichtsverhältnis von zwischen 2:1 und 10:1 in dem Gemisch vorhanden sind.

## Revendications

1. Procédé de fabrication de béton, de mortier ou de coulis de ciment, comprenant l'étape consistant à laisser prendre un mélange d'un matériau d'agrégat approprié pour la fabrication de béton, de mortier ou de coulis de ciment, d'un agent liant et d'eau, dans lequel l'agent liant consiste essentiellement en cendre volante de lignite ayant une teneur en sulfate de 6 pour cent en poids (% en poids) ou plus, sur la base du poids de la cendre volante de lignite, et dans lequel le matériau d'agrégat et la cendre volante de lignite sont présents dans le mélange dans un rapport pondéral compris entre 2:1 et 10:1.

2. Procédé selon la revendication 1, dans lequel la cendre volante de lignite est éteinte avant son ajout au mélange.

3. Procédé selon la revendication 1 ou 2, dans lequel la cendre volante de lignite est broyée avant son ajout au mélange.

4. Procédé selon la revendication 3, dans lequel la cendre volante de lignite a une valeur de Blaine de 400 m²/kg ou plus.

5. Procédé selon l'une des revendications précédentes, dans lequel la cendre volante de lignite a une teneur en sulfate de 7,5 à 15 % en poids, par rapport au poids de la cendre volante de lignite.

6. Procédé selon l'une des revendications précédentes, dans lequel la cendre volante de lignite comprend des oxydes de silicium en une quantité d'au plus 35 % en poids, par rapport au poids de la cendre volante de lignite.

7. Procédé selon l'une des revendications précédentes, dans lequel la quantité combinée des oxydes de silicium, d'aluminium et de fer présents dans la cendre volante de lignite ne dépasse pas 50 % en poids, par rapport au poids de la cendre volante de lignite.

8. Procédé selon l'une des revendications précédentes, dans lequel la cendre volante de lignite comprend de l'oxyde de calcium en une quantité d'au moins 20 % en poids, de préférence de 30 à 50 % en poids, par rapport au poids de la cendre volante de lignite.

9. Procédé selon l'une des revendications précédentes, dans lequel la cendre volante de lignite comprend de la chaux libre, de préférence en une quantité d'au moins 2,5 % en poids, plus préférablement de 4 à 10 % en poids, par rapport au poids de la cendre volante de lignite.

10. Procédé selon l'une des revendications précédentes, dans lequel on ajoute au mélange un ou plusieurs additifs choisis dans le groupe constitué par les colorants, les plastifiants, les stabilisants, les agents imperméabilisants, les agents anti-gel, les agents anti-poussière, les agents d'entraînement de l'air, les agents d'accélération de prise et les conservateurs.

11. Béton, mortier ou coulis de ciment ou plancher en béton pouvant être obtenu par le procédé de l'une des revendications précédentes 1 à 10 ou en permettant de laisser prendre un mélange d'une composition de béton-agrégat comprenant un matériau d'agrégat et un agent de liaison qui consiste essentiellement en cendre volante de lignite ayant une teneur en sulfate de 6 % en poids ou plus, sur la base du poids de la cendre volante de lignite et de l'eau, dans lequel le matériau d'agrégat et la cendre volante de lignite sont présents dans le mélange dans un rapport pondéral compris entre 2:1 et 10:1.

12. Utilisation de cendre volante de lignite ayant une teneur en sulfate de 6 % en poids ou plus, sur la base du poids de la cendre volante de lignite, comme seul agent liant d'un matériau d'agrégat dans la fabrication de béton, de mortier ou de coulis de ciment, dans laquelle le matériau d'agrégat et la cendre volante de lignite sont présents dans le mélange dans un rapport en poids compris entre 2:1 et 10:1.
